# EUROPEAN PATENT SPECIFICATION

(11) **EP 2 724 020 B1**
(45) Date of publication and mention of the grant of the patent: **08.04.2015**
(21) Application number: 12750827.3
(22) Date of filing: 31.07.2012
(51) Int. Cl.: F03D 1/00

(54) **TRACK SYSTEM FOR A WIND TURBINE GENERATOR**
SCHIENENSYSTEM FÜR EINE WINDKRAFTANLAGE
SYSTÈME DE RAIL POUR UNE ÉOLIENNE

(43) Date of publication of application: 30.04.2014
(73) Proprietor: Mitsubishi Heavy Industries, Ltd., Tokyo 108-8215 (JP)
(72) Inventor: ISHIMITSU, Keita, Tokyo 108-8215 (JP); KAMEDA, Takuro, Tokyo 108-8215 (JP); DUDEN, Heinrich, London, Greater London W1K6WL (GB); HILLER, Michael, London, Greater London W1K6WL (GB)
(74) Representative: RGTH
(86) International application number: PCT/JP2012/004860
(87) International publication number: WO 2014/020638

(56) References cited:
- EP-A1- 2 363 598
- EP-A2- 2 192 297
- WO-A1-2013/080392
- WO-A2-2010/031528
- US-A1- 2010 253 086
- US-A1- 2012 014 775

## Description

### Technical Field

The disclosure relates to a track system for a wind turbine generator.

### Background Art

From EP 2 363 598 A1 a wind turbine is known comprising a nacelle being rotatably disposed on a tower with the nacelle having a first cavity, a generator housing portion disposed upstream to the nacelle having a second cavity, a hub disposed upstream to the generator housing portion with attached rotor blades at it having a third cavity, whereby the first, second and third cavities communicate with one another. A rail system is provided that extends through all cavities and comprises three rail-elements. The rail system further has a means for lifting and/or transporting components, especially construction components of the wind turbine in case of maintenance. The means for lifting and/or transporting are movable along the rail-system. Such, the components can be moved from the nacelle through the generator housing portion to the hub. The three rail-elements further give rise to an enhancement of length of the rail-system. A rear end of a first one of the rail elements disposed within the nacelle is even extendible to the outside of the wind turbine through a first opening that can be closed by a hatch.

An alternate loading opening may be disposed at a free ending of the hub as well. The rail system thus can be prolonged from outside one ending of the upper part of the wind turbine through the hub, the generator housing portion and the nacelle to the opposite ending of the wind turbine.

The extension of the length of the rail-system is achieved by a telescopic mechanism letting the first one of the rail elements slide from a rest position within a second one of the rail-elements towards the rear end of the nacelle and further outside the nacelle until it reaches its final prolonged state. The extension of the length of the rail-system into the hub is achieved by mounting a third one of the rail-elements to the second one of the rail-elements building a stable and secure connection by means of screws or welding.

Additionally, a crane and hoist system is disposed on the outer surface of the nacelle and the generator housing portion being connectable to the rail-system. The crane and hoist system may communicate with the means for lifting and/or transporting over a third loading opening thereby enhancing the degrees of freedom such as the directions of movement of a hoisted or lifted component. The crane and hoist system may be detachably attached to a second rail-system allowing axial movements of the crane and hoist system on the outer surface of the wind turbine, i.e. the nacelle and the generator housing portion, so that it is possible to attach the crane and hoist system only in cases of maintenance of the wind turbine. The third loading opening is closable by a pivotably movable hatch as well.

According to a further variation described in EP 2 363 598 A1, the means for lifting and/or transporting is collapsible. Consequently, the means for lifting and/or transporting is in its collapsed state during operation of the wind turbine and in its non-collapsed state during maintenance works or the like.

In the wind turbine known from EP 2 363 598 A1, a direct passage from the nacelle via the generator housing to the interior of the hub is presupposed. However, in some constructions of wind turbines, this cannot be provided.

### Summary of Invention

It is an object of some embodiments of the present invention to design a track system for a wind turbine generator that avoids the above-mentioned problems and provides a more flexible transporting means, especially in cases where no direct access from the nacelle to the interior of the hub is possible.

This object is achieved by a track system for a wind turbine generator, the wind turbine generator comprising:
a nacelle, especially a nacelle which is installed on a tip end part of a tower,
a hub rotatable around a rotation axis and connected to a number of rotor blades being arranged radially around the rotation axis,
wherein the track system comprises at least one track which is installed on the outside of the hub leading from a front portion of the hub between two neighbouring rotor blades to a rear portion of the hub, said rear portion facing the nacelle, and
the track system further comprising a wagon which is adapted to run on the at least one track, said wagon being adapted for component transportation.

In this context, the at least one track may be any kind of guidance means that is adapted for guiding a wagon along a predetermined path. The wagon has to be understood as being any kind of means adapted for transporting a load at least along the at least one track of the track system. A load of the mentioned kind is understood to be any goods to be transported in the ambience of the wind turbine generator, especially in the ambience of the hub, and especially for the purpose of mounting, repair or maintenance of the wind turbine generator and its construction parts. Preferably, such a load can be spare parts and tools for mounting, repair and maintenance as well as used components to be dismounted and removed from the wind turbine generator or its subassemblies. Wind turbine generators are also commonly referred to as wind turbines or wind energy converters.

The track system according to some embodiments of the invention allows for a load, especially a heavy load, to be easily and safely transported from the nacelle or its ambience to the front portion of the hub, from where preferably the interior of the hub may be entered in a simple manner. Thus, a transport of that kind is easily and safely performed even in case there is no direct access from the nacelle to the interior of the hub. This enhances the constructive freedom for building the wind turbine generator without any restrictions during its operation.

According to embodiments of the invention, the at least one track of the track system comprises one or more rails. In this context, the one or more rails have to be understood as any kind of guidance members, preferably elongated along the prede-termined path along which the wagon has to be moved and guided. Especially, the one or more rails can be formed in a conventional manner; they can have cross-sections of various shapes and can be made from various materials, such as steel, aluminium, alloys or mixtures of these or other metals, but also from plastics, such as glass-fibre reinforced plastics, or the like. Further, there can be various numbers of rails forming the at least one track. Most preferably, the at least one track is formed from two or four rails, as will be explained in more detail hereinafter.

In a further embodiment, the track system further comprises a first extension track which is connectable to the at least one track and is installed in the nacelle. By this means, the transport path provided by the track system can easily and simply be extended into the nacelle in case of mounting, repair or maintenance, to allow for a load, e.g. construction parts or the like, to be easily and safely transported from and into the interior of the nacelle, respectively, where this load can easily and thus more advantageously be handled for further transport, repair, maintenance, or the like. However, for enabling operation of the wind turbine generator without any restrictions, the connection of the first extension track to the at least one track on an outside of the hub will be installed only during maintenance works or the like.

Preferably, in the embodiment of the track system described beforehand, the at least one track and the first extension track are connectable in the region of a manhole disposed in the front side of a housing of the nacelle so as to form a common track extending through the manhole. In this manner, the manhole is adapted for not only providing a passage for personnel in case of mounting, repair or maintenance of the wind turbine generator, but is used for transport of spare parts, tools and the like as well. The manhole is disposed in the housing of the nacelle especially such that a passage is formed from the housing of the nacelle to the outside of the hub.

In some embodiments, the track system further comprises at least one second extension track being movably arranged at the front portion of the hub and being adapted to connect to the at least one track at the front portion of the hub. The at least one second extension track allows for a safe and simple transport of a load by means of the wagon in the ambience of the front portion of the hub. In combination with the first extension track such a transport can easily be performed from the nacelle to the front portion of the hub and vice versa. This is especially preferable in view of a hub having an opening at its front portion, especially an opening for ventilation purposes, which according to embodiments of the invention is used additionally for the purpose of transportation of a load between the nacelle and the interior of the hub via said front opening.

To this purpose, in the track system according a further embodiment of the present invention, the at least one second extension track is formed as a hinged track which has hinges to connect the at least one second extension track to the front portion of the hub. This allows for a simple connection of the at least one second extension track to the at least one track of the track system, which connection is easily mountable and detachable with respect to the fact that the at least one second extension track preferably is removed from the front opening of the hub in order not to restrict the use of the front opening for e.g. ventilation purposes during operation of the wind turbine generator.

Preferably, the at least one second extension track is installed in the region of a front opening of the hub. This especially means that the at least one second extension track is installed in the front opening or in the vicinity of the front opening of the hub.

According to another embodiment of the track system, the at least one track or the at least one second extension track has a magnetic attachment to the hub, or the first extension track has a magnetic attachment to the nacelle. In a variation, the at least one track or the at least one second extension track has a bolted attachment to the hub, or the first extension track has a bolted attachment to the nacelle. By this means, different possibilities are provided for a rigid and simple attachment that allows for easy handling during installation and operation. Especially a magnetic attachment allows for a quick mounting and removal of the components of the track system, so that the track system can be easily mounted to the wind turbine generator in case it is needed for mounting, repair or maintenance purposes and can be removed after such work is finished, because in many cases there is no need to permanently provide the track system on the wind turbine generator. This allows for cost and weight savings.

In another embodiment, the track system comprises a derailment guard arrangement for avoiding the derailment of the wagon from the track. Especially where (according to the form of the hub) the track does not take a horizontal course, this allows for a safe movement of the wagon along the track.

Further, the derailment guard arrangement comprises at least one pair of rollers, wherein the rollers are arranged in a fixed distance to each other, and wherein a rail of the at least one track is disposed between the rollers of the at least one roller pair. Thus, the rollers of each of the at least one roller pair encompass the respective rail and in this manner hold the wagon on the at least one track of the track system. Of course, a similar arrangement may also be provided for the first extension track or the at least one second extension track, respectively, as well.

Most preferably, In case of a derailment guard arrangement according to the beforementioned embodiment, the at least one track, and the first extension track and the at least one second extension track as well, are formed from two rails, thus forming a simple arrangement.

In the track system according to embodiments of the invention, the at least one track or the first extension track or the at least one second extension track comprise at least two rails arranged in a fixed distance to each other, and the derailment guard arrangement comprises rollers placed between the at least two rails. In this embodiment, the at least two rails arranged in a fixed distance to each other encompass each of said rollers. This allows for a simpler construction of the wagon.

In case the derailment guard arrangement is formed with the at least two rails arranged in a fixed distance to each other, the at least one track is formed from four rails. However, in a variation of this embodiment, instead of two rails arranged in a fixed distance to each other, especially two separated rails arranged in a fixed distance to each other, a single rail can be provided especially formed with a cross-section having two portions, preferably end portions, encompassing said rollers; the cross-section further having a middle portion connecting said end portions. Such a rail may be formed in the manner of a U-shaped beam, for example.

According to another embodiment the track system further comprises wagon moving means adapted for moving the wagon along the at least one track or the first extension track or the at least one second extension track. These wagon moving means allow for safely, easily and precisely moving the wagon even in case a heavy load is to be transported.

Further preferably, the wagon moving means comprise electrical or mechanical or manual hoisting means, preferably a winch or hoist, and said wagon moving means being disposed inside the nacelle. Further, a rope-like element fixed to the wagon for moving the wagon along the at least one track or along the first extension track or along the at least one second extension track is provided, wherein the wagon is to be pulled by the hoisting means. This allows for a particularly simple and light-weight construction that is flexible in use and can be handled easily. The rope-like element may, for example, be a rope, a chain, a cable, a wire, a belt or a cord.

In order to even more safely and comfortably handle the wagon along the tracks, in another embodiment the track system further comprises a rope-like safety element which is fixed to the wagon, wherein the rope-like safety element is adapted to control the movement of the wagon. The rope-like safety element may, for example, comprise a rope, a chain, a cable, a wire, a belt or a cord.

According to another embodiment the track system further comprises a crane for lifting the wagon or a load to be transported by the wagon in the nacelle. This crane preferably is mounted to the nacelle and is adapted to be used within the housing of the nacelle, but may be also used for transportation purposes outside the nacelle, especially by means of loading openings or the like, provided in the housing of the nacelle. Thus, a simple, universal and efficient means for further transport of the load and/or the wagon, respectively, is provided.

The above-mentioned objects are further achieved by a wind turbine generator, comprising
a nacelle, especially a nacelle which is installed on a tip end part of a tower,
a hub rotatable around a rotation axis and connected to a number of rotor blades being arranged radially around the rotation axis,
the wind turbine generator further comprising a track system having at least one track which is installed on the outside of the hub leading from a front portion of the hub between two neighbouring rotor blades to a rear portion of the hub, said rear portion facing the nacelle, and
the track system further comprising a wagon which is adapted to run on the at least one track and is to be used for component transportation.

In a further embodiment, a wind turbine generator of the pre-described kind further comprises a spinner at least mainly surrounding the hub, the spinner on its inside providing a tunnel-like shaped space at least along the at least one track of the track system for enabling the wagon to perform component transportation along the at least one track.

This tunnel-like shaped space forms a passage or passageway for the wagon, said tunnel-like shaped space being bound by the outer side of the hub and the inner side of the spinner. The load is transported by the wagon in said tunnel-like shaped space and along the outer side of the hub. Preferably, the spinner surrounding the hub and forming a housing for the hub is provided with one or more appropriate bulges or the like above the at least one track of the track system for allowing the wagon and the load to pass along the at least one track. The tunnel-like shaped space, i.e. the space beneath the one or more bulges, and thus the one or more bulges themselves are formed such that the one of the loads to be transported having the largest dimensions can pass along the at least one track unimpeded. This construction allows for an efficient protection of the track system, the load to be transported and the personnel handling the track system against atmospheric influence. This is especially important in case the wind turbine generator in concern is installed offshore.

Preferably, at least one portion of the spinner material including the one or more bulges above the at least one track of the track system is formed as a separate construction part that is mountable and detachable from the remaining portions of the spinner aside the at least one track of the track system, so that an additional possibility is provided for accessing the at least one track of the track system from outside the spinner or for enhancing the possibility of transporting extremely bulky loads.

With respect to the embodiment described beforehand, the above-mentioned manhole providing a passage between the nacelle and the outside of the hub is disposed in the housing of the nacelle such that said passage is formed from the housing of the nacelle preferably to the inside of the spinner.

The above-mentioned objects are further achieved by a method for use of a track system of the pre-described kind, wherein under the condition that the hub is arranged in a blade Y-shape position and that more than one track are provided, the topmost track of the hub is used for transportation of components. A blade Y-shape position especially is achieved in case there are three rotor blades mounted to the hub, preferably offset by 120° each, when one of the blades directly points downward and the portion of the hub located between the other two rotor blades directly points upward. In more general terms, a blade Y-shape position is achieved when a portion of the hub located between any two neighbouring rotor blades directly points upward.

There are various possibilities for arranging the track system according to embodiments of the invention and thus carrying out the method mentioned beforehand. In a cost-efficient and simple version, the track system only comprises one single track which is installed on the outer side of the hub leading from the front portion of the hub along only one of the gaps or spacings between each of two neighbouring rotor blades to the rear portion of the hub faced to the nacelle, whereas there is no track provided along the other gaps or spacings. However, this only allows for using the track system in case of only one well-defined rotor position, whereas in some cases of mounting, repair or maintenance of the wind turbine generator, for example in case of mounting, replacement, repair or maintenance of a pitch drive motor for one or more of the blades, the necessity may occur to stop the rotor in another position, especially in another one of the possible blade Y-shaped positions. This is facilitated by providing a track along more than one, preferably along each of the gaps or spacings between each of two neighbouring rotor blades.

In a further embodiment of the method for use of the track system described beforehand, the at least one second extension track on which the wagon runs is used for transportation of a load, preferably a component or spare part for the hub, inside the hub. Thus, a uniform transport path for the load from the nacelle to the inside of the hub is provided, enabling a simple and easy transport operation.

In summary, the advantage of the track system as described is that there is no need to use the crane in the nacelle for handling of components inside the hub or the spinner. This allows keeping the spinner and the nacelle closed and does not expose the inside of the spinner and that of the nacelle to the outside environment. The components are at all times secured and there is a reduced probability that components can fall and thereby cause severe destructions.

### Brief Description of Drawings

Embodiments of the invention will be described below with reference to the following figures which show in schematic representation:
[fig.1]Figure 1 is a perspective view of a longitudinal cross-section of an embodiment of a centre portion of a rotor of a wind turbine generator, seen in a first viewing direction; the wind turbine generator including a hub, rotor blades mounted to the hub, and an embodiment of a track system;
[fig.2]Figure 2 is a top view of a wind turbine generator comprising said embodiment of the centre portion of the rotor of Figure 1 in combination with an embodiment of a nacelle, seen in a second viewing direction along the section plane of said longitudinal cross-section shown in Figure 1;
[fig.3]Figure 3 is a side view of the wind turbine generator shown in Figure 2, seen in a third viewing direction perpendicular to the section plane of said longitudinal cross-section of Figure 1, i.e. perpendicular to said second viewing direction;
[fig.4]Figure 4 is a perspective view of the wind turbine generator of Figures 2 and 3, seen in a fourth viewing direction relative to said section plane of said longitudinal cross-section;
[fig.5]Figure 5 is a schematic perspective view of a first embodiment of a wagon adapted for an embodiment of a track system, in combination with a first embodiment of a derailment guard arrangement, an embodiment of a wagon moving means and an embodiment of a rope-like safety element;
[fig. 6] Figure 6 is a schematic front view of a second embodiment of a wagon adapted for a second embodiment of a track system, in combination with a second embodiment of a derailment guard arrangement;
[fig.7]Figure 7 is a schematic front view of a third embodiment of a wagon adapted for a third embodiment of a track system, in combination with a third embodiment of a derailment guard arrangement;
[fig.8]Figure 8 is a perspective view of the longitudinal cross-section of the embodiment of the centre portion of the rotor, seen in said first viewing direction as shown in Figure 1, in the state of a first step of an embodiment of a transportation method;
[fig.9]Figure 9 is a perspective view of the longitudinal cross-section of the embodiment of the centre portion of the rotor, seen in said first viewing direction as shown in Figure 1, in the state of a second step of the embodiment of the transportation method;
[fig.10]Figure 10 is a perspective view of the longitudinal cross-section of the embodiment of the centre portion of the rotor, seen in said first viewing direction as shown in Figure 1, in the state of a third step of the embodiment of the transportation method;
[fig.11]Figure 11 is a side view of the longitudinal cross-section of the embodiment of the centre portion of the rotor of Figure 1, seen in said third viewing direction perpendicular to said section plane of said longitudinal cross-section, in the state of a fourth step of the embodiment of the transportation method;
[fig.12]Figure 12 is a perspective view of the longitudinal cross-section of the embodiment of the centre portion of the rotor, seen in said first viewing direction as shown in Figure 1, in the state of a fifth step of the embodiment of the transportation method;
[fig.13]Figure 13 is a perspective view of the longitudinal cross-section of the embodiment of the centre portion of the rotor of Figure 1, seen in a fifth viewing direction relative to said section plane of the longitudinal cross-section, said fifth viewing direction being similar to said fourth viewing direction, in the state of a sixth step of the embodiment of the transportation method;
[fig.14]Figure 14 is a perspective view of the longitudinal cross-section of the embodiment of the centre portion of the rotor of Figure 1, seen in said fifth viewing direction relative to the section plane of the longitudinal cross-section as shown in Figure 13, in the state of a seventh step of the embodiment of the transportation method;
[fig.15]Figure 15 is a perspective top view of a part of the embodiment of the centre portion of the rotor of Figure 1, seen in a sixth viewing direction relative to said section plane of said longitudinal cross-section as shown in Figure 1, said sixth viewing direction being similar to said first viewing direction, in the state of an eighth step of the embodiment of the transportation method; and
[fig.16]Figure 16 is a perspective top view of said longitudinal cross-section of the embodiment of the centre portion of the rotor of Figure 1, seen in said fourth viewing direction relative to said section plane of said longitudinal cross-section, in the state of a ninth step of the embodiment of the transportation method.

### Description of Embodiments

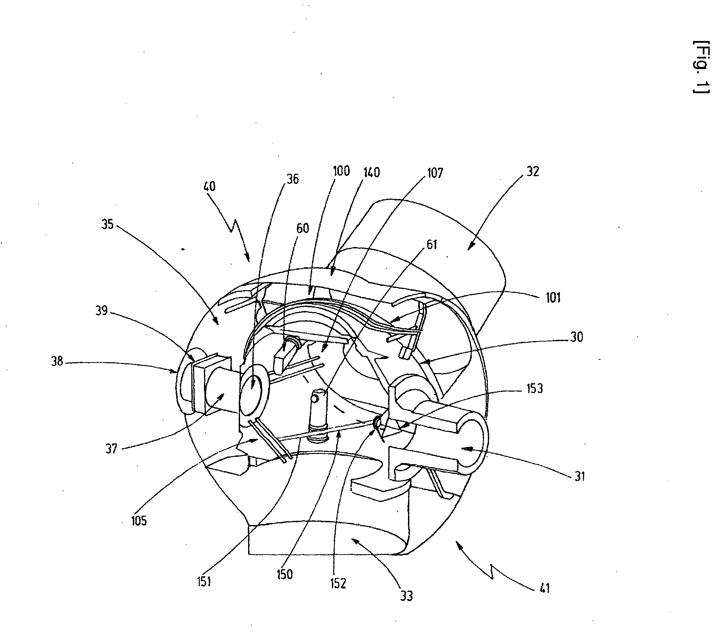

Figure 1 in a perspective schematic view shows a longitudinal cross-section of an embodiment of a centre portion of a rotor 41 of a wind turbine generator 40, comprising a hub 30 mounted to a generator shaft 31 of the wind turbine generator 40, seen in a first viewing direction. In the embodiment shown, the generator shaft 31 is formed as a sleeve shaft; however, various other forms are possible as well. The hub 30 is rotatable around a rotation axis that is identical with a rotation axis of the generator shaft 31, the rotation axis being longitudinally located in the centre of the generator shaft 31. The wind turbine generator 40 and its construction parts as far as they are of importance in context with the described embodiments of the present invention will be discussed hereinafter in more detail in context with Figure 1 and the further Figures of the drawings.

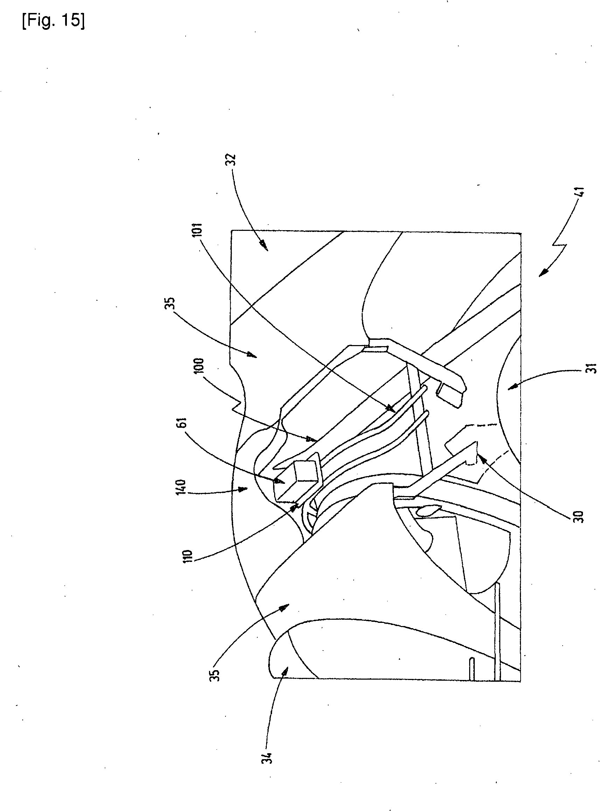

A number of rotor blades being arranged radially around the rotation axis are mounted to the hub 30. In the embodiment shown, three rotor blades are provided, of which rotor blades in the presentation of Figure 1 only a first one and a second one, denoted by reference numerals 32 and 33, respectively, are partly visible. A third rotor blade 34 has been cut away in the view shown in Figure 1. A part of the third rotor blade 34 is, however, shown in Figure 15 described below.

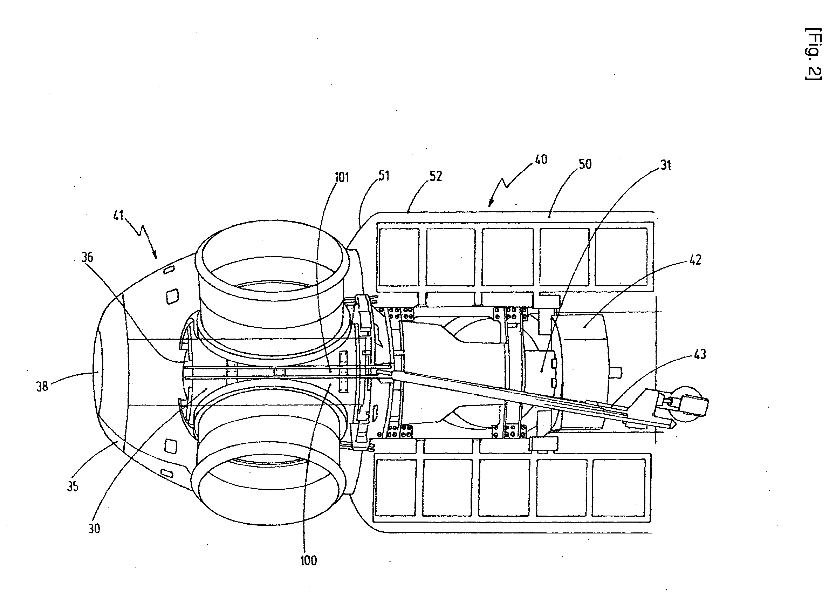

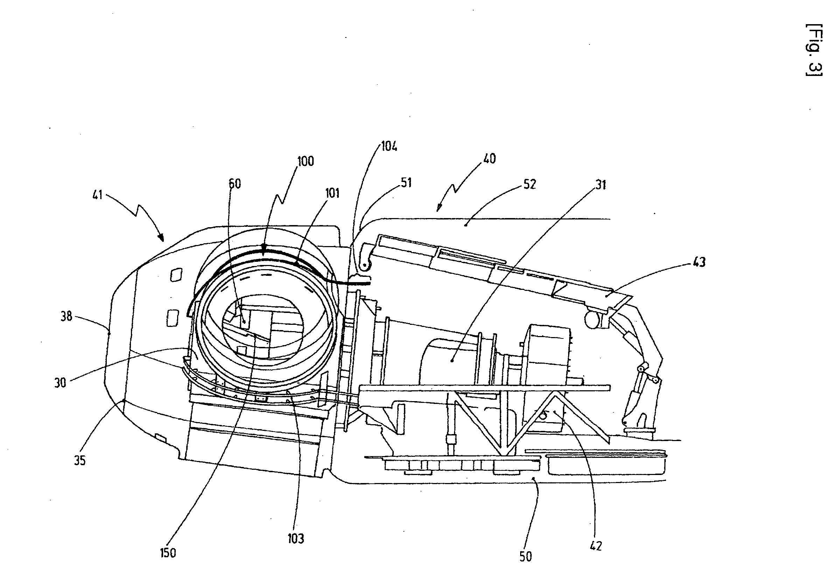

In this embodiment, the hub 30 is at least mainly surrounded by a spinner 35. The spinner covers all portions of the hub except those portions where the rotor blades 32, 33 and 34 are mounted to the hub 30, and except a rear portion of the hub 30 in the ambience of the generator shaft 31, where the spinner adjoins a nacelle 50, that is a portion of the hub 30 that is faced to the nacelle 50, as is shown in and will be described in context with Figures 2 and 3, thus providing a weather protection for the hub 30 and all construction parts mounted to the hub 30.

The hub 30 in the embodiment shown in Figure 1 is provided with a front opening 36 at least mainly centrically arranged with respect to the rotation axis. Especially during operation of the wind turbine generator 40, the front opening 36 serves as an intake for an air stream used for cooling of the wind turbine generator 40, especially for cooling a generator arrangement comprised in the wind turbine generator 40. To this purpose, the front opening 36 is further connected to an air duct 37 extending along the rotation axis of the hub 30 to a front portion of the spinner 35, at which front portion the air duct 37 further is connected to a front opening 38 of the spinner 35. From this front opening 38 of the spinner 35, air can flow through the air duct 37 and the front opening 36 of the hub 30 into the interior of the hub 30. The air duct 37 further comprises a filter-ventilator unit 39 controlling the air flow and filtering dirt and moisture from the air flowing in.

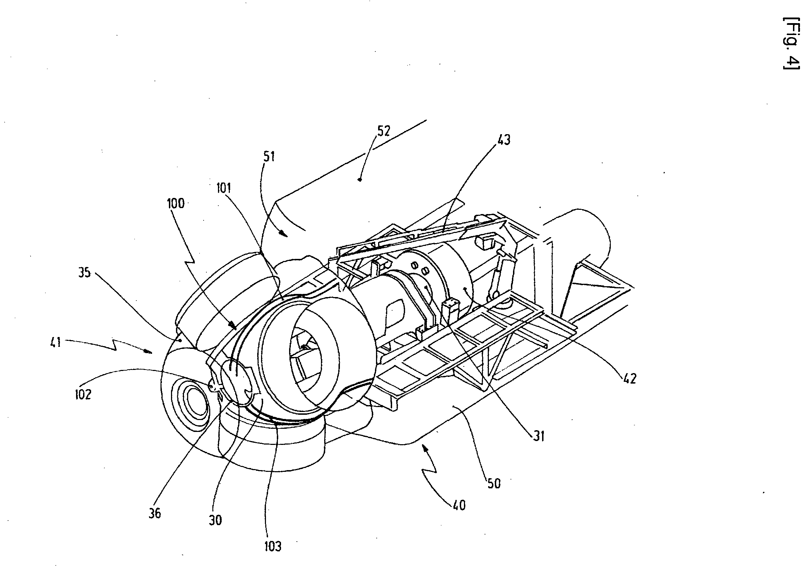

The embodiment of the rotor 41 of the wind turbine generator 40 shown in Figure 1 further comprises a track system 100. The embodiment of this track system 100 as shown in the Figures of the accompanying drawings consists of a number of tracks 101, 102 and 103, respectively, which tracks 101, 102, 103 are installed on an outside of the hub. Each of the tracks 101, 102, 103 leads from a front portion of the hub 30 along its surface between two neighbouring ones of the rotor blades 32, 33, and 34, respectively, to the rear portion of the hub 30faced to the nacelle 50. Especially, a first one of the tracks, denoted by reference numeral 101, leads from the front portion of the hub 30, that is from an edge of the front opening 36 of the hub 30, between the first and the third neighbouring rotor blades 32, 34 to the rear portion of the hub 30 faced to the nacelle 50. In the same manner, a second one of the tracks, denoted by reference numeral 102 and shown in Figure 4 described below in more detail, leads from the edge of the front opening 36 of the hub 30 between the first and the second neighbouring rotor blades 32, 33 to the rear portion of the hub 30, and the third one of the tracks, denoted by reference numeral 103 and shown in Figures 3 and 4 described below in more detail, leads from the edge of the front opening 36 of the hub 30 between the second and the third neighbouring rotor blades 33, 34 to the rear portion of the hub 30.

The track system further comprises a first extension track 104 which is installed in the nacelle 50. According to the current position in which the rotor 41 is stopped, the first extension track 104 is connectable to one of each of the first, second and third track 101, 102, 103, respectively. Preferably, the first extension track 104 is removably mounted in the nacelle 50, so that it is mounted in case a transport by means of the track system 100 has to be performed, for instance in case of maintenance or the like of the wind turbine generator 40, and is detached afterwards before starting operation of the wind turbine generator 40. As the hub 30 and therefore the tracks 101, 102, 103 installed on the hub 30 rotate with respect to the nacelle 50 during operation of the wind turbine generator 40, a connection between the tracks 101, 102, 103, respectively, and the first extension track 104 is not appropriate during operation of the wind turbine generator 40.

Preferably, the tracks 101, 102, 103, respectively, and the first extension track 104 are arranged to be connectable in the region of a manhole (not shown in the Figures) disposed in a front side 51 of a housing 52 of the nacelle 50. The first, second or third track 101, 102, 103, respectively, on the one hand, and the first extension track 104 on the other hand thus form a common track extending through this manhole. In this manner, a passage is formed from the housing 52 of the nacelle 50 to the outside of the hub 50 and from there advantageously to the inside of the spinner 35 surrounding the hub 30 and forming a housing for the hub 30. By this means a weather protected transport path is provided by the track system from the front opening 36 of the hub 30 to the interior of the housing 52 of the nacelle 50.

The embodiment of the track system 100 further comprises three second extension tracks. The second extension tracks are movably arranged at the front portion of the hub 30, especially at the edge of the front opening 36 of the hub 30. Each one of the second extension tracks is adapted to be connected to one of the first, second and third track 101, 102, 103, respectively, at the front portion of the hub 30, that is at the edge of the front opening 36. Especially, second extension track "one" 105 is to be connected to the first track 101 of the track system 100. In the same manner, second extension track "two" (not visible in the Figures) is to be connected to the second track 102 of the track system 100, and second extension track "three" 107 is to be connected to the third track 103 of the track system 100.

The second extension tracks 105, 107 are formed as hinged tracks, that is the second extension tracks 105, 107 have hinges to fasten the second extension tracks 105, 107 (and, of course, also second extension track "two" though not shown in the Figures) to the edge of the front opening 36 at the front portion of the hub 30. By means of said hinges, the second extension tracks are pivotably arranged in the region of the front opening 36 of the hub and thus can be pivoted so as to be located directly in the front opening 36 or in front of the front opening 36. In this position, each one of the second extension tracks is connected to the respective track 101, 102, 103 of the track system 100 on the outside of the hub 30. Preferably, only one of the second extension tracks is connected to its respective track 101, 102, 103, whereas the other two second extension tracks are arranged in a parking position that is preferably located inside the hub 30. In Figure 1, second extension track "one" and second extension track "three" are shown in their respective parking positions.

In the embodiment shown, the tracks 101, 102, 103 of the track system 100 as well as the second extension tracks may be detachably mounted to the hub 30. Accordingly, in order to facilitate mounting and detaching of the track system 100, the tracks 101, 102, 103 and the second extension tracks may have a magnetic attachment to the hub 30. In the same manner, the first extension track 104 may have a magnetic attachment to the nacelle 50.

In a variation to the foregoing, the tracks 101, 102, 103 of the track system 100 as well as the second extension tracks may be permanently mounted to the hub 30. Accordingly, in order to provide for simple and rigid mounting means for the track system 100 to be fastened, the tracks 101, 102, 103 and the second extension tracks may have a bolted attachment to the hub 30. Moreover, the first extension track 104 may as well have a bolted attachment to the nacelle 50. There may also be provided a mixed form of fastenings of the several tracks, that is some may be mounted by magnetic attachment, others by bolted attachment, so that those ones of the tracks that for instance need to be detached during operation of the wind turbine generator 40 are easily removable, whereas other ones of the tracks are preferably rigidly fastened to provide a safe fixing for instance even under the condition that the hub 30 is rotating and thus may cause great forces acting on the attachments.

In Figure 2 an embodiment of the wind turbine generator 40 to which the track system 100 according to the embodiment of the present invention as described beforehand is installed is partly shown in a top view, seen in a second viewing direction along the section plane of said longitudinal cross-section shown in Figure 1. Elements in Figure 2 and in the following Figures that are identical with those elements already described in the foregoing are denoted by identical reference numerals.

The embodiment of the wind turbine generator 40 according to Figure 2 comprises the embodiment of the rotor 41, the centre portion of which rotor 41 is described beforehand in context with Figure 1. In this embodiment of the wind turbine generator 40, the rotor 41 is combined with the embodiment of the nacelle 50 mentioned above, which nacelle 50 especially is installed on a tip end part of a tower (not shown). In the wind turbine generator 40, the generator shaft 31 is supported in the nacelle 50, so that the rear portion of the hub 30 in the ambience of the generator shaft 31 adjoins the nacelle 50, especially the front side 51 of the housing 52 of the nacelle 50. Surrounded by this housing 52, the nacelle 50 includes machinery 42 for generating and providing electrical energy by means of a wind-driven rotation of the rotor 41 and thus of the generator shaft 31. As this machinery 42 does not directly impact on the present invention, a more detailed description of these parts of the wind turbine generator is omitted here.

In the nacelle 50, further a crane 43 is installed for lifting loads, for instance spare parts, tools and the like, preferably for the purpose of mounting, repair and maintenance of the wind turbine generator 40, within the housing 52 of the nacelle 50. However, the crane 43 may be used for handling loads outside the housing 52 of the nacelle 50 as well, in case there are one or more openings, such as hatches or the like, provided in the housing 52 for enabling the beam of the crane to project to the outside of the nacelle 50. In the embodiment shown, the crane 43 is provided with a telescopic beam; however, other constructions are possible as well, for instance a crane with an articulated arm or a knuckle crane or a rail-element with means for lifting and/or transporting a load as shown in EP 2 363 598 A1. Preferably, the crane 43 may be a portable crane that is detachably mounted to the nacelle so that it can be removed in case it is not needed in the wind turbine generator, especially during operation of the wind turbine generator. A particular use of the crane 43 in context with embodiments of the present invention will be described hereinafter.

In Figure 3, as another illustration a side view of the wind turbine generator 40 shown in Figure 2 is shown, seen in a third viewing direction perpendicular to the section plane of the longitudinal cross-section of Figure 1, i.e. perpendicular to said second viewing direction as mentioned above. Figure 4 further shows a perspective view of the wind turbine generator 40 of Figures 2 and 3, seen in a fourth viewing direction relative to said section plane of said longitudinal cross-section. Elements in Figures 3 and 4 that have already been described in the foregoing are again denoted by the same reference numerals

The track system 100 further comprises a wagon 110 which is adapted to run on the tracks 101, 102, 103, on the first extension track 104, on second extension track "one" 105, on second extension track "two" and on second extension track "three" 107, respectively, and is to be used for transporting a load, especially for component transportation.

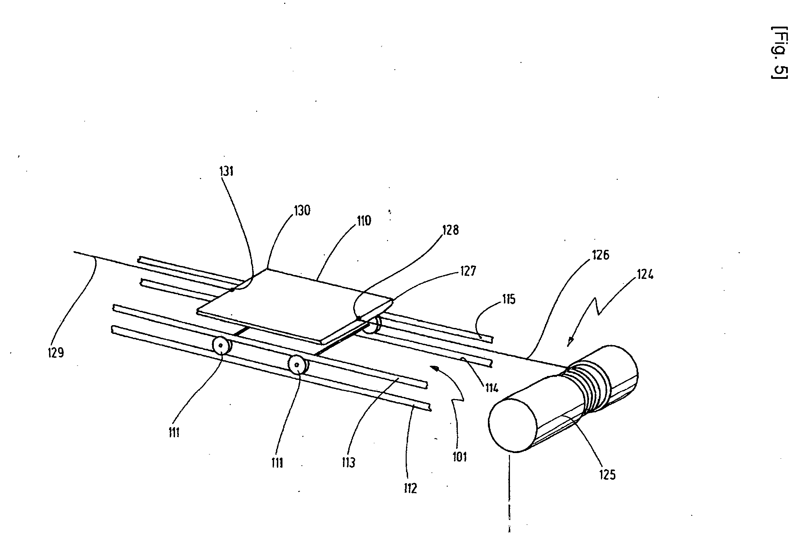

An embodiment of a wagon 110 of this kind is schematically shown in Fig. 5. In principle, in this embodiment the wagon 110 is built as a platform wagon with rollers 111 attached to it, the wagon 110 moving along said tracks by means of the rollers 111. As an example, in Figure 5 only the first track 101 is shown; however, instead of running on the first track 101 the wagon 110 can run on all other tracks described beforehand as well.

Preferably, the wagon 110 is provided with a hinged plate (not shown) to prevent the load from slipping. Further, the wagon 110 is provided with means for sufficiently securing the load in form of especially tension belts or the like (not shown).

The tracks comprised by the track system 100 according to an embodiment of the invention generally comprise one or more rails. In the embodiment as shown in Figure 5, the first track 101 of the embodiment of the track system 100 as shown advantageously is formed from four rails 112, 113, 114, 115, that is two pairs of rails, the pairs denoted by the reference numerals 112, 113 and 114, 115, respectively. The two rails 112, 113 of a first one of the pairs are arranged in a fixed distance to each other. In the same manner, the two rails 114, 115 of a second one of the pairs are arranged in a fixed distance to each other as well.

Preferably all other tracks of the embodiment of the track system 100 as shown, that is the second and third track 102, 103, the first extension track 104 and the second extension tracks 105, 107, comprise two pairs of rails arranged in said fixed distance to each other as well. The rollers 111 of the wagon 110 in this configuration of rails are guided between the two rails of each of the pairs 112, 113 and 114, 115. Such, even taking into account that the tracks 101 to 107 follow the curvature and the slope of the hub 30 so that the wagon 110 is guided along an inclined path, the wagon 110 is prevented from derailment from the tracks 101 to 107. The pairs of rails 112, 113, 114, 115 together with the rollers 111 placed between the two pairs of rails thus form a first embodiment of a derailment guard arrangement.

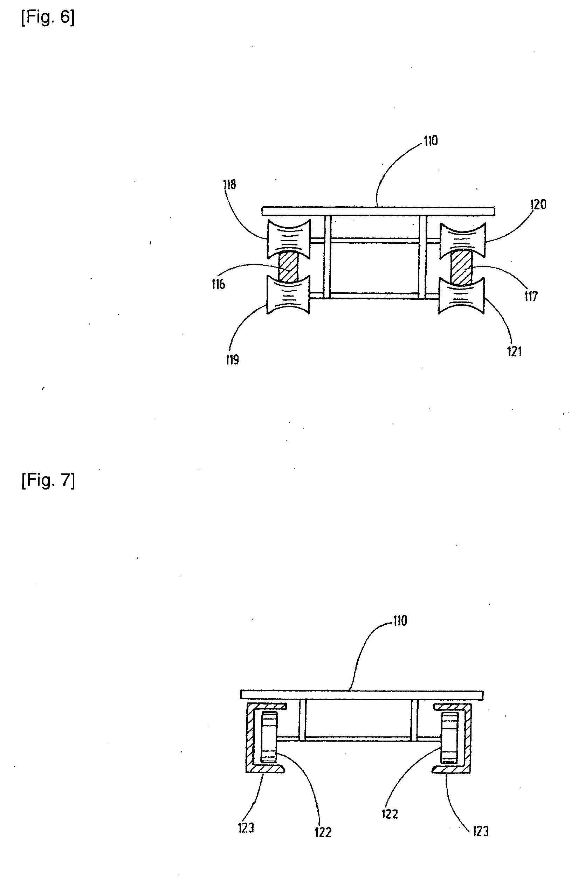

In Figure 6 a schematic front view of a second embodiment of a wagon 110 adapted for a second embodiment of a track system 100, in combination with a second embodiment of a derailment guard arrangement is shown. In this embodiment, the tracks 101 to 107 are formed from two rails 116, 117 each. The wagon 110 in this embodiment is provided with two pairs of rollers 118, 119 and 120, 121, respectively, wherein the rollers 118, 119 and 120, 121, respectively, of each of the pairs of rollers are arranged in a fixed distance to each other, and wherein one of the rails 116, 117 of the tracks 101 to 107 is disposed between the rollers 118, 119 and 120, 121, respectively, of the roller pairs. Such, the derailment guard arrangement in this embodiment comprises two pairs of rollers arranged around two rails.

Figure 7 shows a schematic front view of a third embodiment of a wagon 110 adapted for a third embodiment of a track system 100, in combination with a third embodiment of a derailment guard arrangement. Here, the tracks 101 to 107 are formed from two U-sections 123 arranged adjacently and at least mainly in parallel, the openings of the U-sections 123 turned to each other. In these U-sections, rollers 122 mounted to the wagon 110 are guided. Thus, a derailment of the wagon from the tracks 101 to 107 is avoided.

Referring once more to Figure 5, a wagon moving means 124 adapted for moving the wagon 110 along the first, second or third track 101, 102, 103 or along the first extension track 104 or along the second extension tracks 105, 107 is schematically shown. The wagon moving means 124 comprises electrical or mechanical or manual hoisting means, preferably a winch or hoist 125. The winch or hoist 125 is provided with a rope-like element 126, especially a rope, a chain, or the like. The winch or hoist moves, that is: pulls, the wagon 110 by means of the rope-like element 126. To this purpose, the wagon 110 at its front end 127 is provided with a connector device 128 by which the rope-like element 126 of the winch or hoist 125 is fixed to the front end 127 of the wagon 110.

Preferably, the winch or hoist 125 of said wagon moving means 124 is disposed inside the nacelle 50. The wagon thus can be simply moved by one single moving means 124, that is by one single winch or hoist 125 and by one single rope-like element 126, along each one of the tracks 101 to 107 of the track system 100.

The track system 100 according to the embodiment of the invention as shown in Figure 5 further comprises a rope-like safety element 129 which is fixed to the wagon 110, wherein the rope-like safety element 129 is adapted to control the movement of the wagon. Especially, to this purpose, the wagon 110 at its rear end 130 is provided with a second connector device 131 by which the rope-like safety element 129 is fixed to the rear end 130 of the wagon 110. The rope-like safety element 129 is especially provided in form of a rope, a chain, or the like. To control the movement of the wagon 110, the rope-like element 126 and the rope-like safety element 129 are pulled in opposite moving directions of the wagon 110, the pulling force of that one of the elements 126, 129, respectively, that pulls the wagon 110 in the chosen direction being an appropriate amount larger than the pulling force of the other one of said elements 126, 129, respectively.

Referring once more to the embodiment shown in Figure 1, the spinner 35 on its inside provides a tunnel-like shaped space along the first, second and third track 101, 102 and 103, respectively, of the track system 100 for enabling the wagon 110 to perform component transportation along the tracks 101, 102, 103. The tunnel-like shaped space forms passageway for the wagon 110 and the load fixed to the wagon 110 along the outside of the hub 30 and inside the spinner 35. By this means, simple and effective protection against atmospheric influence is achieved.

Further, to improve and simplify said weather protection measures, the manhole is disposed in the front side 51 of the housing 52 of the nacelle 50 such that the aforementioned passageway is formed from the housing 52 of the nacelle 50 to the inside of the spinner 35 surrounding the hub 30 and forming a housing for the hub 30 preferably passing said manhole.

To form the tunnel-like shaped space, the spinner 35 is provided with a bulge above each one of the first, second and third track 101, 102, 103 of the track system 100 for allowing the wagon 110 and the load to pass along said tracks 101, 102, 103. The tunnel-like shaped space beneath the bulges, and thus the bulges themselves are formed such that the load with the largest dimensions expected to be transported can pass along said tracks 101, 102, 103 without difficulties. In Figure 1, one of the bulges denoted by reference numeral 140 is shown arranged beneath the first track 101. Similar bulges are arranged beneath the second and third tracks 102, 103 as well.

Preferably, at least one portion of the spinner material including the bulge 140 above the first track 101 is formed as a separate construction part that is mountable and detachable from the remaining portions of the spinner 35 aside the first track 101, so that an additional possibility is provided for accessing the first track 101 from outside the spinner 35 or for enhancing the possibility of transporting extremely bulky loads along he first track 101. A similar arrangement is provided for the bulges beneath the second and third track 102, 103 as well.

In combination with the wagon 110 movable on the tracks 101 to 107, the crane 43 is particularly adapted for lifting the wagon 110 or the load to be transported by the wagon 110 in the nacelle 50. To this purpose, the wagon 110 is moved to the first extension track 104. The wagon 110 and/or the load are lifted from this position by the crane 43 and can be transported inside or outside the housing 52 of the nacelle 50, in case there are one or more openings, such as hatches or the like, provided in the housing 52 for enabling the beam of the crane to project to the outside of the nacelle 50, as described beforehand. The position into which the crane 43 is brought for lifting the wagon 110 and/or the load from the first extension track 104 is shown in Figures 2, 3 and 4.

The embodiment according to Figure 1 further shows a pivot crane 150 located in the interior of the hub 30. The pivot crane 150 mainly comprises a crane beam 151 movably coupled at one of its ends by a pivot, especially a ball joint 152, to a supporting frame 153. The supporting frame 153 is fixedly attached to the generator shaft 31 and is rotatable together with the generator shaft 31. At its other end, the crane beam 151 is provided with means for hoisting a load. In Figure 1, the pivot crane 150 is shown in a parking position taken during operation of the wind turbine generator 40. The pivot crane 150 is adapted to handle and transport the load inside the hub 30, preferably to hoist the load onto or from the wagon 110.

As a typical load to be transported by the pivot crane 150, the wagon 110 and the crane 43 in the nacelle 50, in Figure 1 two pitch drive motors 60, 61 for the first and second rotor blade 32, 33, respectively, are shown. A third pitch drive motor (not shown) is provided in the hub 30 for the third rotor blade 34 as well. These pitch drive motors are provided for adjusting the pitch of the rotor blades 32, 33, 34, respectively, according to the operation conditions of the wind turbine generator 40, for instance the wind force and the amount of electrical power to be delivered by the wind turbine generator 40. For instance for the purpose of maintenance, these pitch drive motors 60, 61 are preferably detached from the hub 30 and transported to the nacelle 50.

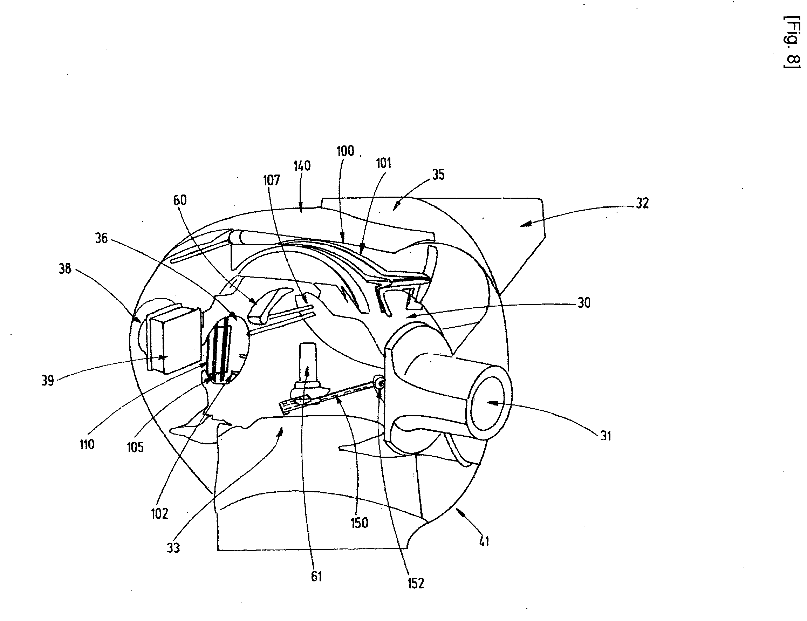

Figures 8 to 16 show a sequence of nine steps of a transport process as an embodiment and example for a method. To perform this method, the rotor 41 of the wind turbine generator 40 is locked in a position in which the hub 30 is arranged in a blade Y-shape position; that is, in the arrangement shown in Figures 1 and 8, the first and the third rotor blade 32, 34 point upwards under an angle of 30° with respect to the horizon each, whereas the second rotor blade points straight downward. Under this condition, the portion of the hub 30 carrying the first track 101 is allocated straight beneath the rotation axis of the rotor 41, that is the rotation axis of the hub 30 and the generator shaft 31. In other words, the first track 101 is allocated at the top of the hub 30 and is therefore used for transportation of a load, for instance of components, spare parts, tools and the like needed for maintenance of the wind turbine generator 40. The example of the transport process described hereinafter especially shows a transport action carried out for the purpose of pitch drive motor replacement.

Figure 8 shows the embodiment of the centre portion of the rotor 41 of Figure 1 in the state of a first step of the embodiment of the transportation method. In this first step, the second extension track "one", denoted by reference numeral 105 and named "second extension track 105" hereinafter for the sake of simplicity, is moved from its parking position as shown in Figure 1 and allocated just in front of the front opening 36 of the hub 30, where it is connected to the first track 101 so as to form a continuous transport path for the wagon 110. As shown beforehand in Figure 3, in the position of the hub 30 taken in Figures 1 and 8, the first track 101 is also connectable to the first extension track 104, which connection is established for the described first step of the transportation method.

Now, the wagon 110 is set onto the first extension track 104 in the nacelle 50 and is moved by means of the described wagon moving means 124 along the first extension track 104 and the first track 101 until it arrives on the second extension track 105. This stage of the transportation method is shown in Figure 8.

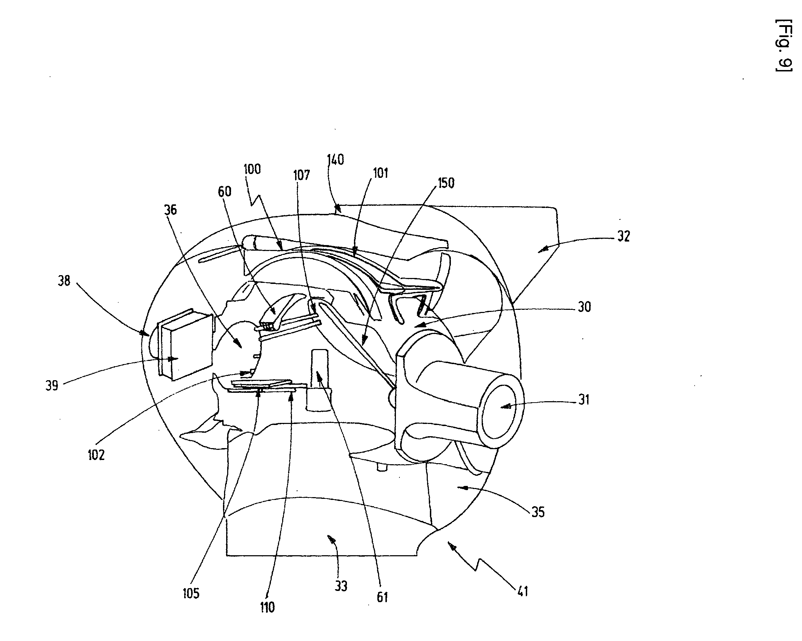

Figure 9 shows the embodiment of the centre portion of the rotor 41 of Figure 1 in the state of a second step of the embodiment of the transportation method. In this second step, the second extension track 105 together with the wagon 110 allocated thereon is pivoted into an at least nearly horizontal position. This is performed by swivelling the second extension track 105 together with the wagon 110 allocated thereon around the hinges by which the second extension track 105 is connected to the hub 30. To this purpose, preferably the wagon 110 is locked to the second extension track 105 by braking means (not shown). Then, preferably but not necessarily, the rope-like element 126 of the wagon moving means 124 is detached from the front end 127 of the wagon 110 by appropriately actuating the connector device 128 by which the rope-like element 126 of the winch or hoist 125 is fixed to the front end 127 of the wagon 110.

Furthermore, Figure 9 shows that in said second step of the embodiment of the transportation method shown the pivot crane 150 is unlocked from its parking position and is pivoted into a position in which its crane beam 151 is arranged at least mainly vertically beneath the pitch drive motor 61 for the second rotor blade 33, which pitch drive motor 61 in the embodiment shown is deemed to be detached from the hub and transported to the nacelle 50 for maintenance purposes.

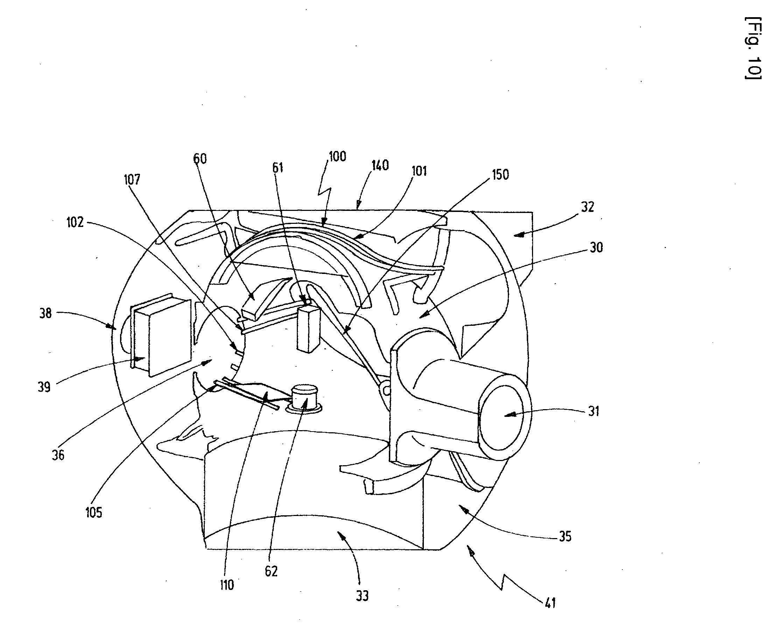

Figure 10 shows the embodiment of the centre portion of the rotor 41 of Figure 1 in the state of a third step of the embodiment of the transportation method. In this third step, the pitch drive motor 61 is attached to the crane beam 151 of the pivot crane 150 by means of a hook, a hoist or the like (not shown), and is secured by the pivot crane. Then, the pitch drive motor 61 is detached from a socket 62 which, for instance, is adapted for mounting the pitch drive motor 61 to the hub 30 and may also contain a gear or the like for transmitting a pitch adjusting movement from the pitch drive motor 61 to the second rotor blade 33. Further, the pitch drive motor 61 is lifted off the socket 62, which action is shown in Figure 10.

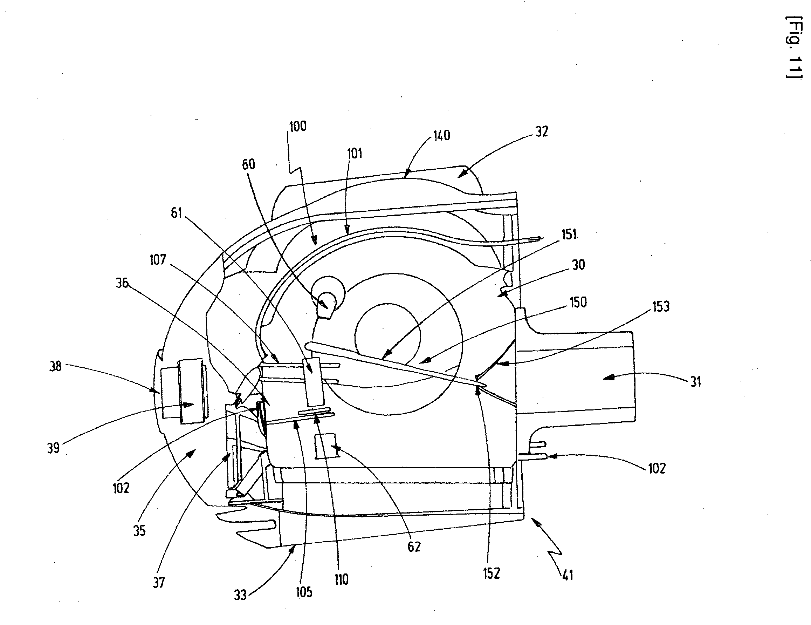

Figure 11 shows the embodiment of the centre portion of the rotor 41 of Figure 1 in the state of a fourth step of the embodiment of the transportation method. In this fourth step, the crane beam 151 of the pivot crane 150 is pivoted beneath the wagon 110 on the second extension track 105 and the pitch drive motor 61 is lowered onto the wagon 110.

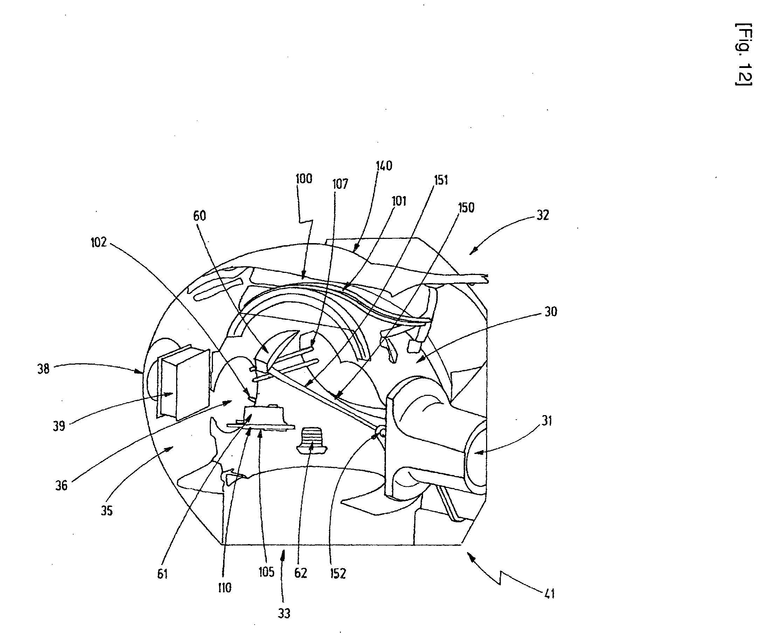

Figure 12 shows the embodiment of the centre portion of the rotor 41 of Figure 1 in the state of a fifth step of the embodiment of the transportation method. In this fifth step, the pitch drive motor 61 is turned into a horizontal position for being further fixed and transported on the wagon 110 more safely. The pitch drive motor 61 thus forming the load to be transported by the wagon 110 is then appropriately and sufficiently secured on the wagon 110, for instance by means of tension belts or the like (not shown) as described beforehand. From this fifth step it can also be seen that the second extension track 105 on which the wagon 110 runs is used for transportation of the load inside the hub 30, wherein the load preferably is a component or spare part for the hub30, that is the pitch drive motor 61 in the embodiment shown.

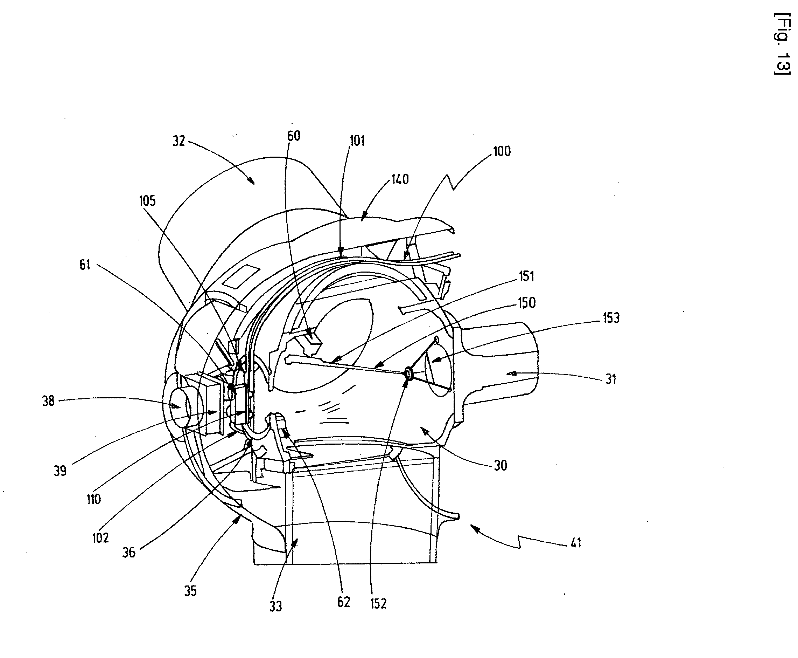

Figure 13 shows the embodiment of the centre portion of the rotor 41 of Figure 1 in the state of a sixth step of the embodiment of the transportation method, in this sixth step, the pitch drive motor 61 is detached from the pivot crane 150. Then, the second extension track 105 together with the wagon 110 allocated thereon and the pitch drive motor 61 allocated on the wagon 110 and fixed thereon is pivoted back into the at least nearly vertical position in which the second extension track 105 is again connected to the first track 101. This is performed by swivelling the second extension track 105 together with the wagon 110 allocated thereon and the pitch drive motor 61 allocated on the wagon 110 around the hinges by which the second extension track 105 is connected to the hub 30. During this action, the wagon 110 is still locked to the second extension track 105 by the braking means (not shown) as mentioned above. Then, if having been detached in the second step of the embodiment of the transportation method as described beforehand in context with Figure 9, the rope-like element 126 of the wagon moving means 124 again is attached to the front end 127 of the wagon 110 by appropriately actuating the connector device 128, thus again fixing the rope-like element 126 of the winch or hoist 125 to the front end 127 of the wagon 110.

In this context it should be remarked that during all steps of the embodiment of the transportation method as described, the rope-like safety element 129 preferably can remain attached to the rear end 130 of the wagon 110.

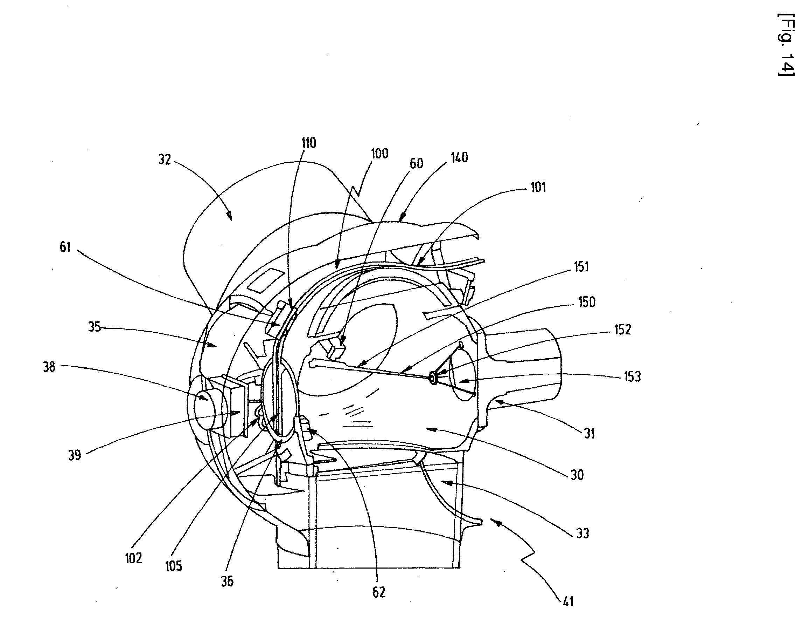

Figure 14 shows the embodiment of the centre portion of the rotor 41 of Figure 1 in the state of a seventh step of the embodiment of the transportation method. In this seventh step, the wagon together with the pitch drive motor 61 is pulled along the transport path formed by the second extension track 105, the first track 101 and the first extension track 104, by means of the wagon moving means 124. Figure 14 shows the wagon 110 in a position in which it has just left the second extension track 105 and is still moved along the first track 101 in the ambience of the front opening 36 of the hub 30.

Figure 15 shows the embodiment of the centre portion of the rotor 41 of Figure 1 in the state of an eighth step of the embodiment of the transportation method. In this state, the wagon 110 is further moved along the first track 101 and has reached a position directly between the first rotor blade 32 and the third rotor blade 34, that is at a vertex of the curvature of the hub 30.

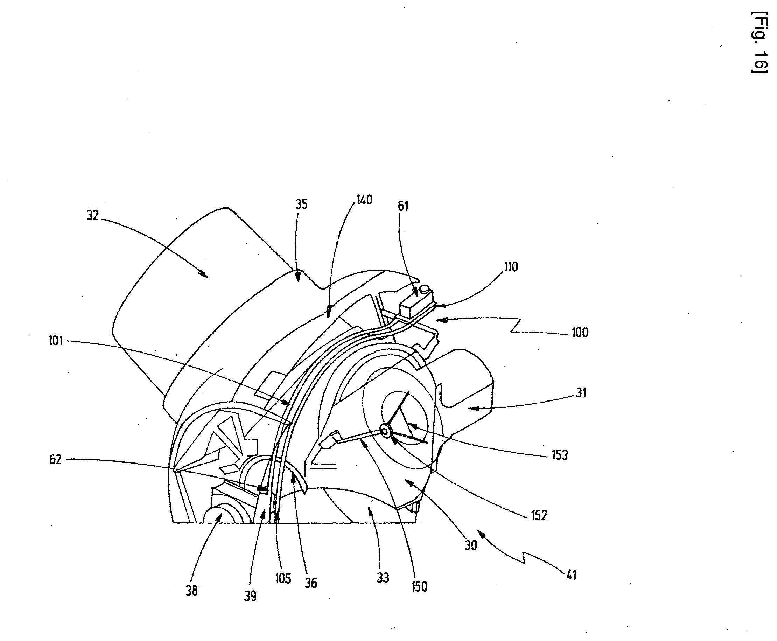

Finally, Figure 16 shows the embodiment of the centre portion of the rotor 41 of Figure 1 in the state of a ninth step of the embodiment of the transportation method. In this ninth step, the wagon 110 with the pitch drive motor 61 fixed thereon is moved just to that end of the first track 101 where it is connected to the first extension track 104. From this position, the wagon 110 can be moved onto the first extension track 104, where the pitch drive motor 61 can be lifted off the wagon 110 for further transport.

In conclusion, an arrangement and a method is provided for transferring components from inside the hub 30 into the spinner 35 and further into the nacelle 50 and vice versa. For this purpose, the track system 100 is used to carry spare parts and tools inside the rotor head, that is especially the hub 30, and used components into the nacelle 50 for transportation by the crane 43 in the nacelle 50. The track system 100 comprises a fixed part mounted on the surface, that is the outside of the hub 30 and a second extension rail 105 formed as a hinged part of the track that reaches inside the hub 30 to be loaded with the components. On the tracks 101 to 107 a wagon 110 is installed to transport the components.

Alternatively, instead of the second extension track 105 being formed as the hinged part or in another variation additionally to the second extension track 105 it is also possible to have the pivot crane 150 inside the hub 30 extendible so as to bring the components outside the hub 30, where the components can be fixed on the wagon 110 directly.

Either the wagon 110 or the tracks are designed in a way to provide for a derailment guard arrangement.

The advantage of such a transport system is that there is no need to use the crane 43 in the nacelle 50 for a handling of components inside the hub 30 and the spinner 35. This allows for the spinner 35 and the nacelle 50 to be kept closed and does not expose the inside of the spinner 35 and the nacelle 50 to the outside environment. The components are at all times secured and there is a reduced probability that components can fall.

## Claims

1. A track system (100) for a wind turbine generator, the wind turbine generator comprising:
a nacelle (50), especially a nacelle which is installed on a tip end part of a tower,
a hub (30) rotatable around a rotation axis and connected to a number of rotor blades being arranged radially around the rotation axis,
**characterised in that** the track system comprises at least one track (101, 102, 103) which is installed on an outside surface of the hub leading from a front portion of the hub between two neighbouring rotor blades to a rear portion of the hub, said rear portion facing the nacelle, and
the track system further comprising a wagon (110) which is adapted to run on the at least one track, said wagon being adapted for component transportation.

2. The track system according to claim 1,
wherein the at least one track comprises one or more rails.

3. The track system according to claim 1,
further comprising a first extension track which is connectable to the at least one track and is installed in the nacelle.

4. The track system according to claim 3,
wherein the at least one track and the first extension track are connectable in the region of a manhole disposed in the front side of a housing of the nacelle so as to form a common track extending through the manhole.

5. The track system according to claim 1,
further comprising at least one second extension track being movably arranged at the front portion of the hub and being adapted to connect to the at least one track at the front portion of the hub.

6. The track system according to claim 5,
wherein the at least one second extension track is formed as a hinged track which has hinges to connect the at least one second extension track to the front portion of the hub.

7. The track system according to claim 5,
wherein the at least one second extension track is installed in the region of a front opening of the hub.

8. The track system according to claim 1, 3 or 5,
wherein the at least one track or the at least one second extension track has a magnetic attachment to the hub, or wherein the first extension track has a magnetic attachment to the nacelle.

9. The track system according to claim 1, 3 or 5,
wherein the at least one track or the at least one second extension track has a bolted attachment to the hub, or wherein the first extension track has a bolted attachment to the nacelle.

10. The track system according to claim 1, 3 or 5,
wherein the track system comprises a derailment guard arrangement for avoiding the derailment of the wagon from the track.

11. The track system according to claim 10,
wherein the derailment guard arrangement comprises at least one pair of rollers, wherein the rollers are arranged in a fixed distance to each other, and wherein a rail of the at least one track is disposed between the rollers of the at least one roller pair.

12. The track system according to claim 10,
wherein the at least one track or the first extension track or the at least one second extension track comprise at least two rails arranged in a fixed distance to each other and wherein the derailment guard arrangement comprises rollers placed between the at least two rails.

13. The track system according to claim 1, 3 or 5,
the track system further comprising wagon moving means adapted for moving the wagon along the at least one track or the first extension track or the at least one second extension track.

14. The track system according to claim 13,
wherein the wagon moving means comprise electrical or mechanical or manual hoisting means, preferably a winch or hoist, and said wagon moving means being disposed inside the nacelle, and a rope-like element fixed to the wagon for moving the wagon along the at least one track or along the first extension track or along the at least one second extension track, wherein the wagon is to be pulled by the hoisting means.

15. The track system according to claim 1,
the track system further comprising a rope-like safety element which is fixed to the wagon, wherein the rope-like safety element is adapted to control the movement of the wagon.

16. The track system according to claim 1,
the track system further comprising a crane for lifting the wagon or a load to be transported by the wagon in the nacelle.

17. A wind turbine generator, comprising:
a nacelle (50), especially a nacelle which is installed on a tip end part of a tower,
a hub (30) rotatable around a rotation axis and connected to a number of rotor blades being arranged radially around the rotation axis,
**characterised by** the wind turbine generator further comprising a track system (100) having at least one track (101, 102, 103) which is installed on an outside surface of the hub leading from a front portion of the hub between two neighbouring rotor blades to a rear portion of the hub faced to the nacelle, and
the track system further comprising a wagon (110) which is adapted to run on the at least one track and is to be used for component transportation.

18. A wind turbine generator according to claim 17, further comprising a spinner at least mainly surrounding the hub, the spinner on its inside providing a tunnel-like shaped space at least along the at least one track of the track system for enabling the wagon to perform component transportation along the at least one track.

19. Method for use of a track system according to claim 1,
wherein under the condition that the hub is arranged in a blade Y-shape position, the track at the top of the hub is used for transportation of components.

20. Method for use of a track system according to claim 5,
wherein the at least one second extension track on which the wagon runs is used for transportation of a load, preferably a component or spare part for the hub, inside the hub.

## Patentansprüche

1. Schienensystem (100) für einen Windturbinengenerator, wobei der Windturbinengenerator umfasst:
eine Gondel (50), insbesondere eine Gondel, die auf einem Spitzenendteil eines Turms installiert ist,
eine Nabe (30), die drehbar um eine Drehachse ist und mit einer Anzahl von Rotorflügeln, die radial um die Drehachse angeordnet sind, verbunden ist,
**dadurch gekennzeichnet, dass** das Schienensystem mindestens eine Schiene (101, 102, 103) umfasst, die auf einer äußeren Oberfläche der Nabe installiert ist, die von einem vorderen Abschnitt der Nabe zwischen zwei benachbarten Rotorflügeln zu einem hinteren Abschnitt der Nabe führt, wobei der hintere Abschnitt der Gondel zugewandt ist, und
wobei das Schienensystem ferner einen Wagen (110) umfasst, der dafür ausgelegt ist, auf der mindestens einen Schiene zu fahren, wobei der Wagen für einen Komponententransport ausgelegt ist.

2. Schienensystem nach Anspruch 1, wobei die mindestens eine Schiene ein oder mehrere Laufschienen umfasst.

3. Schienensystem nach Anspruch 1, das ferner eine erste Verlängerungsschiene umfasst, die mit der mindestens einen Schiene verbindbar ist und in der Gondel installiert ist.

4. Schienensystem nach Anspruch 3, wobei die mindestens eine Schiene und die erste Verlängerungsschiene in dem Bereich eines Mannloches verbindbar sind, das in der vorderen Seite eines Gehäuses der Gondel angeordnet ist, um eine gemeinsame Schiene zu bilden, die sich durch das Mannloch erstreckt.

5. Schienensystem nach Anspruch 1, das ferner mindestens eine zweite Verlängerungsschiene umfasst, die beweglich an dem vorderen Abschnitt der Nabe angeordnet ist und die dafür ausgelegt ist, sich mit der mindestens einen Schiene an dem vorderen Abschnitt der Nabe zu verbinden.

6. Schienensystem nach Anspruch 5, wobei die mindestens eine zweite Verlängerungsschiene als eine gelenkige Schiene gebildet ist, die Gelenke aufweist, um die mindestens eine zweite Verlängerungsschiene mit dem vorderen Abschnitt der Nabe zu verbinden.

7. Schienensystem nach Anspruch 5, wobei die mindestens eine zweite Verlängerungsschiene in dem Bereich einer vorderen Öffnung der Nabe installiert ist.

8. Schienensystem nach Anspruch 1, 3 oder 5, wobei die mindestens eine Schiene oder die mindestens eine zweite Verlängerungsschiene eine magnetische Befestigung an der Nabe aufweist, oder wobei die erste Verlängerungsschiene eine magnetische Befestigung an der Gondel aufweist.

9. Schienensystem nach Anspruch 1, 3 oder 5, wobei die mindestens eine Schiene oder die mindestens eine zweite Verlängerungsschiene eine geschraubte Befestigung an der Nabe aufweist, oder wobei die erste Verlängerungsschiene eine geschraubte Befestigung an der Gondel aufweist.

10. Schienensystem nach Anspruch 1, 3 oder 5, wobei das Schienensystem eine Anordnung für einen Entgleisungsschutz umfasst, um die Entgleisung des Wagens von der Schiene zu vermeiden.

11. Schienensystem nach Anspruch 10, wobei die Anordnung für einen Entgleisungsschutz mindestens ein Paar von Rollen umfasst, wobei die Rollen in einem festen Abstand zueinander angeordnet sind, und wobei eine Laufschiene der mindestens einen Schiene zwischen den Rollen des mindestens einen Rollen-Paares angeordnet ist.

12. Schienensystem nach Anspruch 10, wobei die mindestens eine Schiene oder die erste Verlängerungsschiene oder die mindestens eine zweite Verlängerungsschiene mindestens zwei Laufschienen umfassen, die in einem festen Abstand zueinander angeordnet sind, und wobei die Anordnung für einen Entgleisungsschutz Rollen umfasst, die zwischen den mindestens zwei Laufschienen angeordnet sind.

13. Schienensystem nach Anspruch 1, 3 oder 5, wobei das Schienensystem ferner Mittel zur Bewegung eines Wagens umfasst, die dafür ausgelegt sind, den Wagen entlang der mindestens einen Schiene oder der ersten Verlängerungsschiene oder der mindestens einen zweiten Verlängerungsschiene zu bewegen.

14. Schienensystem nach Anspruch 13, wobei die Mittel zur Bewegung des Wagens elektrische oder mechanische oder manuelle Hebemittel umfassen, vorzugsweise eine Winde oder eine Hebevorrichtung, und wobei die Mittel zur Bewegung des Wagens innerhalb der Gondel angeordnet sind, und wobei ein seilähnliches Element an dem Wagen befestigt ist, um den Wagen entlang der mindestens einen Schiene oder entlang der ersten Verlängerungsschiene oder entlang der mindestens einen zweiten Verlängerungsschiene zu bewegen, wobei der Wagen von den Hebemitteln gezogen werden muss.

15. Schienensystem nach Anspruch 1, wobei das Schienensystem ferner ein seilähnliches Sicherheitselement umfasst, das an dem Wagen befestigt ist, wobei das seilähnliche Sicherheitselement dafür ausgelegt ist, die Bewegung des Wagens zu steuern.

16. Schienensystem nach Anspruch 1, wobei das Schienensystem ferner einen Kran zum Hochheben des Wagens oder einer Last, die von dem Wagen in der Gondel transportiert werden soll, umfasst.

17. Windturbinengenerator, umfassend:
eine Gondel (50), insbesondere eine Gondel, die auf einem Spitzenendteil eines Turms installiert ist,
eine Nabe (30), die drehbar um eine Drehachse ist und mit einer Anzahl von Rotorflügeln, die radial um die Drehachse angeordnet sind, verbunden ist,
**dadurch gekennzeichnet, dass** der Windturbinengenerator, der ferner ein Schienensystem (100) umfasst, das mindestens eine Schiene (101, 102, 103) aufweist, die auf einer äußeren Oberfläche der Nabe installiert ist, die von einem vorderen Abschnitt der Nabe zwischen zwei benachbarten Rotorflügeln zu einem hinteren Abschnitt der Nabe führt, der der Gondel zugewandt ist, und
wobei das Schienensystem ferner einen Wagen (110) umfasst, der dafür ausgelegt ist, auf der mindestens einen Schiene zu fahren, und wobei der Wagen für einen Komponententransport verwendet werden soll.

18. Windturbinengenerator nach Anspruch 17, der ferner ein Schleuderrad umfasst, das mindestens im Wesentlichen die Nabe umgibt, wobei das Schleuderrad auf seiner Innenseite einen tunnelähnlich gebildeten Raum mindestens entlang der mindestens einen Schiene des Schienensystems bereitstellt, um dem Wagen zu ermöglichen, entlang der mindestens einen Schiene einen Komponententransport durchzuführen.

19. Verfahren für die Verwendung eines Schienensystems nach Anspruch 1, wobei unter der Bedingung, dass die Nabe in einer Y-förmigen Flügelposition angeordnet ist, die Schiene auf der Oberseite der Nabe zum Transport von Komponenten verwendet wird.

20. Verfahren für die Verwendung eines Schienensystems nach Anspruch 5, wobei die mindestens eine zweite Verlängerungsschiene, auf der der Wagen läuft, für den Transport einer Last, vorzugsweise eine Komponente oder ein Ersatzteil für die Nabe, innerhalb der Nabe verwendet wird.

## Revendications

1. Système de voies (100) pour un générateur de turbine éolienne, le générateur de turbine éolienne comprenant :
une nacelle (50), en particulier une nacelle qui est mise en place sur une partie d'extrémité de pointe d'une tour,
un moyeu (30) pouvant tourner autour d'un axe de rotation et raccordé à un certain nombre de pales de rotor disposées radialement autour de l'axe de rotation,
**caractérisé en ce que** le système de voies comprend au moins une voie (101, 102, 103) qui est mise en place sur une surface extérieure du moyeu allant d'une partie avant du moyeu entre deux pales de rotor voisines jusqu'à une partie arrière du moyeu, ladite partie arrière faisant face à la nacelle, et
le système de voies comprenant en outre un wagon (110) qui est adapté pour se déplacer sur cette au moins une voie, ledit wagon étant adapté pour le transport de composants.

2. Système de voies selon la revendication 1, dans lequel cette au moins une voie comprend un ou plusieurs rails.

3. Système de voies selon la revendication 1, comprenant par ailleurs une première voie d'extension qui peut être raccordée à cette au moins une voie et est mise en place dans la nacelle.

4. Système de voies selon la revendication 3, dans lequel cette au moins une voie et la première voie d'extension peuvent être raccordées dans la zone d'un trou d'homme disposé dans le côté frontal d'un logement de la nacelle de manière à former une voie commune s'étendant à travers le trou d'homme.

5. Système de voies selon la revendication 1, comprenant par ailleurs au moins une deuxième voie d'extension disposée de manière mobile sur la partie avant du moyeu et adaptée pour être raccordée à cette au moins une voie sur la partie avant du moyeu.

6. Système de voies selon la revendication 5, dans lequel cette au moins une deuxième voie d'extension est formée en tant que voie à charnière ayant des charnières afin de raccorder cette au moins une deuxième voie d'extension à la partie avant du moyeu.

7. Système de voies selon la revendication 5, dans lequel cette au moins une deuxième voie d'extension est mise en place dans la zone d'une ouverture avant du moyeu.

8. Système de voies selon la revendication 1, 3 ou 5, dans lequel cette au moins une voie ou l'au moins une deuxième voie d'extension possède une fixation magnétique au moyeu, ou dans lequel la première voie d'extension possède une fixation magnétique à la nacelle.

9. Système de voies selon la revendication 1, 3 ou 5, dans lequel cette au moins une voie ou l'au moins une deuxième voie d'extension possède une fixation boulonnée au moyeu, ou dans lequel la première voie d'extension possède une fixation boulonnée à la nacelle.

10. Système de voies selon la revendication 1, 3 ou 5, dans lequel le système de voies comprend un agencement de protection contre le déraillement pour éviter le déraillement de la voie par le wagon.

11. Système de voies selon la revendication 10, dans lequel l'agencement de protection contre le déraillement comprend au moins une paire de rouleaux, dans lequel les rouleaux sont disposés à une distance fixe l'un par rapport à l'autre, et dans lequel un rail de l'au moins une voie est disposé entre les rouleaux de cette au moins une paire de rouleaux.

12. Système de voies selon la revendication 10, dans lequel cette au moins une voie ou la première voie d'extension ou l'au moins une deuxième voie d'extension comprend au moins deux rails disposés à une distance fixe l'un par rapport à l'autre et dans lequel l'agencement de protection contre le déraillement comprend des rouleaux placés entre les au moins deux rails.

13. Système de voies selon la revendication 1, 3 ou 5, le système de voies comprenant en outre un moyen de déplacement de wagon adapté pour déplacer le wagon le long de cette au moins une voie ou de la première voie d'extension ou de cette au moins une deuxième voie d'extension.

14. Système de voies selon la revendication 13, dans lequel le moyen de déplacement de wagon comprend un moyen de levage électrique ou mécanique ou manuel, de préférence un treuil ou un engin de levage, et ledit moyen de déplacement de wagon étant disposé à l'intérieur de la nacelle, et un élément semblable à une corde fixé au wagon afin de déplacer le wagon le long de cette au moins une voie ou le long de la première voie d'extension ou le long de cette au moins une deuxième voie d'extension, dans lequel le wagon doit être tiré par le moyen de levage.

15. Système de voies selon la revendication 1, le système de voies comprenant en outre un élément de sécurité semblable à une corde qui est fixé au wagon, dans lequel l'élément de sécurité semblable à une corde est adapté pour contrôler le déplacement du wagon.

16. Système de voies selon la revendication 1, le système de voies comprenant en outre une grue pour soulever le wagon ou une charge à transporter par le wagon dans la nacelle.

17. Générateur de turbine éolienne, comprenant :
une nacelle (50), en particulier une nacelle qui est mise en place sur une partie d'extrémité de pointe d'une tour,
un moyeu (30) pouvant tourner autour d'un axe de rotation et raccordé à un certain nombre de pales de rotor disposées radialement autour de l'axe de rotation,
**caractérisé en ce que** le générateur de turbine éolienne comprend en outre un système de voies (100) ayant au moins une voie, (101, 102, 103) qui est mise en place sur une surface extérieure du moyeu allant d'une partie avant du moyeu entre deux pales de rotor voisines jusqu'à une partie arrière du moyeu faisant face à la nacelle, et
le système de voies comprenant en outre un wagon (110) qui est adapté pour se déplacer sur cette au moins une voie et doit être utilisé pour le transport de composants.

18. Générateur de turbine éolienne selon la revendication 17, comprenant en outre un capot de moyeu d'hélice entourant au moins essentiellement le moyeu, le capot de moyeu d'hélice fournissant sur son intérieur un espace de forme semblable à un tunnel, au moins le long de cette au moins une voie du système de voies, afin de permettre au wagon d'effectuer le transport de composants le long de cette au moins une voie.

19. Procédé pour l'utilisation d'un système de voies selon la revendication 1, dans lequel, dans l'état où le moyeu est disposé dans une position en forme de Y des pales, la voie sur le haut du moyeu est utilisée pour le transport de composants.

20. Procédé pour l'utilisation d'un système de voies selon la revendication 5, dans lequel cette au moins une deuxième voie d'extension sur laquelle le wagon se déplace est utilisée pour le transport d'une charge, de préférence un composant ou une pièce détachée pour le moyeu, à l'intérieur du moyeu.
